# EUROPEAN PATENT APPLICATION

(11) **EP 2 919 437 A1**
(43) Date of publication of application: **16.09.2015**
(21) Application number: 13796276.7
(22) Date of filing: 26.07.2013
(51) Int. Cl.: H04L 29/08

(54) **CAPABILITY OPEN PLATFORM, METHOD AND GATEWAY FOR ACHIEVING TERMINAL DEVICE PLUG AND PLAY MANAGEMENT**

(30) Priority: 12.11.2012 CN 201210450307
(71) Applicant: ZTE Corporation, Shenzhen, Guangdong 518057 (CN)
(72) Inventor: YU, Changjian, Shenzhen Guangdong 518057 (CN); DENG, Shuo, Shenzhen Guangdong 518057 (CN)
(74) Representative: Lemcke, Brommer & Partner Patentanwälte Partnerschaft mbB
(86) International application number: PCT/CN2013/080240
(87) International publication number: WO 2013/178174

(57) **Abstract**

A capability open platform, a device identification method and a gateway for implementing PNP management of a terminal device are provided, wherein the capability open platform is used to identify a terminal device which has not been connected to a gateway according to the label information uploaded by the gateway, thus implementing the PNP of the terminal device which is not supported. The method includes that the gateway acquires the label information of a terminal device by a terminal authorization mechanism, calls the device identification service of the capability open platform to identify the terminal device that has not been connected to the gateway. The disclosure enables the gateway to identify the terminal device which is not under the protocols supported by the gateway but needed to be connected, so as to be compatible with PNP management and service of all a terminal device.

## Description

### TECHNICAL FIELD

The disclosure relates to the technology of management of a connected terminal device in Internet Of Things (IOT), in particular to a capability open platform, method and gateway for implementing a PNP management of a terminal device.

### BACKGROUND

One big problem in the Internet Of Things (IOT) is the variety of protocols and standards of terminal devices. Different manufacturers, alliances and organizations of terminal devices have set out their respective communication protocols and standards, which brought a tremendous difficulty to IOT gateways (e.g. home gateways) which aim at the implementation of access and management of terminal devices. What is even worse is the high mobility of devices in IOT applications. For example, one could take a portable device, such as a blood pressure monitor or a blood glucose monitor with him while dropping in on his friends. This makes an IOT gateway to confront the access of various new devices at any time. Along with the development of IOT applications, an IOT gateway has been not only the one implementing the access and data transmission of terminal devices, but also a local control centre for implementing the device access, management, control and service. For example, existing advanced IOT home gateways have been provided with a touch screen control interface, on which the running states of devices within a home may be displayed and through which devices within home, such as illumination, air-conditioners and televisions, may be controlled.

Apparently, it is not practical to implement hundreds of, and constantly increased protocols in one gateway for implementing the access, management, control and service of all devices is impractical. Whereas, for an existing gateway which merely implements one or few protocols, it is impossible to make devices under other protocols connected into the gateway and controlled by it. For example, IOT home gateways, proposed by China mobile in the application of "Livable Pass", only supports the access and control of terminal devices which meet the Wireless Machine to Machine Protocol (WMMP) formulated by China mobile. With these gateways, users may view the situation of doors and windows in household, control air-conditioners, and set or remove alarms. In this case, the WMMP is a specification formulated by China mobile, which is made in order to specify the data communication between IOT terminals and the platform of Machine-to-Machine (M2M) and implement the uniform management of IOT terminals by the M2M platform. As the constitution foundation of the IOT, M2M is used to represent connections and communication between machines.

To summarize, in order to avoid excessive device protocols and standards, it can be seen from an analysis on applications scenarios of gateways that, at the macro level, the IOT needs hundreds of different protocols to be implemented, while at the micro level, a single gateway only needs to support several or more than a dozen protocols in application, which is achievable by the single gateway. Thus the key to solve the problem described above is to propose a gateway, which is able to dynamically load needed modules within its effective range depending on the device type to be connected and controlled, so as to implement the plug and play (PNP) of devices. Meanwhile, one of the key points for the implementing the PNP of devices is to find a method with high availability which enables the gateway to identify device types needed to be connected. However, such method has not been proposed up to now.

### SUMMARY

To this end, the embodiments of the disclosure provide a capability open platform, a device identification method and a gateway for implementing Plug-and-Play (PNP) management of a terminal device, enabling the gateway to identify the terminal device which is not under the protocols supported by the gateway but needed to be connected, so as to be compatible with PNP management and service of all terminal devices.

To achieve the object described above, the technical solution in the embodiments of the disclosure is implemented as follows.

A capability open platform for implementing PNP management of a terminal device is provided, which is configured to identify a terminal device which has not been connected to a gateway according to label information uploaded by the gateway, to enable the gateway to implement PNP of the terminal device which is not supported.

In this case, the capability open platform may include a device identification service unit configured to identify a device type of the terminal device which has not been connected to the gateway according to the label information of the terminal device uploaded by the gateway, to match according to information of the gateway a module and file required by the gateway for device identification, management and service, and to feed back to the gateway the required module and file or download addresses of the required module and file.

In this case, the capability open platform further may include an authentication service unit, a label information registration service unit, an address registration service unit and an upload service unit; wherein
the authentication service unit is configured to authenticate a manufacturer of the terminal device, followed by registration, upload and download services when the authentication succeeds;
the label information registration service unit is configured to register label information of the terminal device;
the address registration service unit is configured to register the download addresses of the module and file which are required by the gateway for the device identification, management and service; and
the uploading service unit is configured to provide upload services of the module and file which are required by the gateway for the device identification, management and service.

A device identification method for implementing PNP management of a terminal device includes that a gateway acquires label information of a terminal device through a terminal authorization mechanism, and calls a device identification service of a capability open platform to identify the terminal device that has not been connected to the gateway.

In this case, the step of a gateway acquires label information of a terminal device through a terminal authorization mechanism may include that the gateway acquires the label information of the terminal device which has not been connected to the gateway by authorizing a terminal device which has been connected to the gateway and has capability of reading label information to read the label information of the terminal device which has not been connected to the gateway.

In this case, the step of identifying the terminal device that has not been connected to the gateway may include that the authorized terminal device sends the gateway the read label information of the terminal device which has not been connected to the gateway, the gateway calls the device identification service of the capability open platform after receiving the label information sent by the authorized terminal device, wherein the data sent from the gateway to the capability open platform includes the label information of the terminal device which has not been connected to the gateway and the information of the gateway.

In this case, the label information may include any one of the following information: a bar code, a Quick Response (QR) code, a Radio Frequency Identification Device (RFID) label.

In this case, after the gateway calls the device identification service of the capability open platform, the method further may include that:
the capability open platform acquires the label information of the terminal device which has not been connected to the gateway and the information of the gateway, which are uploaded by the gateway;
the capability open platform identifies a device type of the terminal device which has not been connected to the gateway according to the label information of the terminal device which has not been connected to the gateway, matches, according to the device type and the information of the gateway, a module and file required by the gateway for the device identification, management and service, and feeds back the required module and file or download addresses of the required module and file to the gateway.

In this case, the method further may include that the gateway performs device identification, management and service directly according to required module and file; or
the gateway downloads the required module and file according to the download addresses and then performs device identification, management and service.

A gateway for implementing PNP management of a terminal device includes a device authorization module, a device identification module and a extendable framework; wherein
the device authorization module is configured to authorize an external device to serve as a label information collecting device of the gateway, and further configured to grant or revoke the authorization of the external device and to maintain authorization information;
the device identification module is configured to call a device identification service of a capability open platform and to send label information of a terminal device and information of the gateway to the capability open platform; and
the extendable framework is configured to enable the gateway to dynamically load a downloaded module to achieve a function extension.

The label information may include any one of the following information: a bar code, a Quick Response (QR) code, and a Radio Frequency Identification Device (RFID) label.

In this case, the gateway further may include a wireless module, a download module and a download management module; wherein
the wireless module is configured to realize the authorization of the external device and to receive a bar code or a QR code or a RFID label by interacting with the authorized external device through at least one of following communication methods: Wifi, Bluetooth, Zigbee, RF433, RF779 and infrared light;
the download module is configured to download from a Wide Area Network (WAN) a module or file which is required for implementing management and service of the terminal device according to a download address fed back by the capability open platform; and
the download management module is configured to manage the module or file downloaded from the WAN, and is further configured to save or delete the downloaded module or file according to a strategy.

A gateway for implementing PNP management of a terminal device includes a label reading module provided with a camera, a device identification module and a extendable framework; wherein
the label reading module provided with a camera, which is connected with a host of the gateway wirelessly and has a great mobility, is configured to read label information and send the label information wirelessly;
the device identification module is configured to call a device identification service of a capability open platform and to send acquired label information of a terminal device and information of the gateway to the capability open platform; and
the extendable framework is configured to enable the gateway to dynamically load a downloaded module to achieve a function extension.

The label information may include any one of the following information: a bar code, a QR code, and a RFID label.

In this case, the gateway further may include a wireless module, a download module and a download management module; wherein
the wireless module is configured to realize the authorization of the external device and to receive a bar code or a QR code or a RFID label by interacting with the authorized external device through at least one of following communication methods: Wifi, Bluetooth, Zigbee, RF433, RF779 and infrared light;
the download module is configured to from a Wide Area Network (WAN) a module or file which is required for implementing management and service of the terminal device according to a download address fed back by the capability open platform; and
the download management module is configured to manage the module or file downloaded from the WAN, and is further configured to save or delete the downloaded module or file according to a strategy.

The capability open platform according to the embodiments of the disclosure is configured to identify a terminal device which has not been connected to a gateway according to the label information uploaded by the gateway, thus implementing the PNP of the terminal device which is not supported. The embodiments of the disclosure implement the identification of a terminal device which has not been connected to a gateway, which enables the gateway to identify the terminal device which is not under the protocols supported by the gateway but needed to be connected, so as to be compatible with PNP management and service of all terminal devices.

### BRIEF DESCRIPTION OF THE DRAWINGS

Fig. 1 is a schematic view of the structure of a capability open platform according to an embodiment of the disclosure;
Fig. 2 is a schematic view of a flowchart for implementing an embodiment of the disclosure;
Fig. 3 is a schematic view of the structure of a gateway in an embodiment of the disclosure;
Fig. 4 is a schematic view of the structure of a gateway in another embodiment of the disclosure;
Fig. 5 is a schematic view of a network architecture during the interaction between the capability open platform and the gateway according to an embodiment of the disclosure;
Fig. 6 is a schematic view of the interaction with external based on the capability open platform according to an embodiment of the disclosure; and
Fig. 7 is a flowchart of a device C controlling a device B through a gateway in an embodiment of the disclosure.

### DETAILED DESCRIPTION

In the embodiments of the disclosure, a gateway acquires the label information of a terminal device by a terminal authorization mechanism, calls a device identification service of a capability open platform to identify the terminal device that has not been connected to the gateway.

The solution of the disclosure and its advantages are summarily described below, following is the specific description of the solution.

Since a bar code, a QR code and a Radio Frequency Identification (RFID) label are more and more popular, each of these label information can serve as a unique identifier of a terminal device. Moreover, smart terminals have got the function of scanning bar codes and QR codes, and will have the capability of reading RFID labels in the near future. In addition to smart phones, any device with a camera can be configured to read bar codes and QR codes. Thus, it is possible to take advantage of the application technology which uses label information including bar codes, QR codes and RFID labels. And mobile devices such as widely used smart phones have advantage in terms of unlimited location and convenience to use, with respect to Internet of Things (IOT) gateway devices with fixed locations.
I. In the embodiments of the disclosure, one solution of identifying a terminal device which has not been connected to a gateway with label information is: a gateway authorizes a terminal device which has the capability of reading label information and has been connected to the gateway to serve as a device instead of the gateway to collect label information, the terminal device which has the capability of reading label information and has been connected to the gateway performs the identification on other terminal devices which have not been connected to the gateway (the terminal device which has the capability of reading label information and has been connected to the gateway may read the bar code, QR code or RFDI label information of other terminal devices which have not been connected to the gateway and send the read label information to the gateway, and then the gateway implements the identification of other terminal devices which have not been connected to the gateway according to the label information), and then performs management such as access and control and provides services for the identified devices, which will evidently and greatly improve the operability of the solution. Here, the terminal device which has the capability of reading label information and has been connected to the gateway is actually the one supported by the gateway at the moment. In this way, a limited number of devices which are supported by the gateway at the moment can be employed to identify more devices which do not support current gateway protocols, such that the gateway can identify the device types of terminal devices not supporting protocols supported by the gateway but needed to be connected, so as to be compatible with the PNP management of all terminal devices and to provide services. Furthermore, this solution does not modify the gateway, reducing the manufacturing cost in gateway modification.
II. The embodiments of the disclosure further provide a solution of identifying, using label information, a terminal device which has not been connected to a gateway, which modifying the gateway to enhance its capability of reading label information, and also has the advantage of the first solution to distinguish from the prior art, that is: a limited number of devices which are supported by the gateway at the moment may be employed to identify more devices which do not support current gateway protocols, such that the gateway can identify the device types of terminal devices not supporting protocols supported by the gateway but needed to be connected, so as to be compatible with the PNP management of all terminal devices and to provide services. However, the extra manufacturing cost in modifying the gateway is needed.

The implementation of the technical solution is further described in more detail, in combination with accompanying figures.

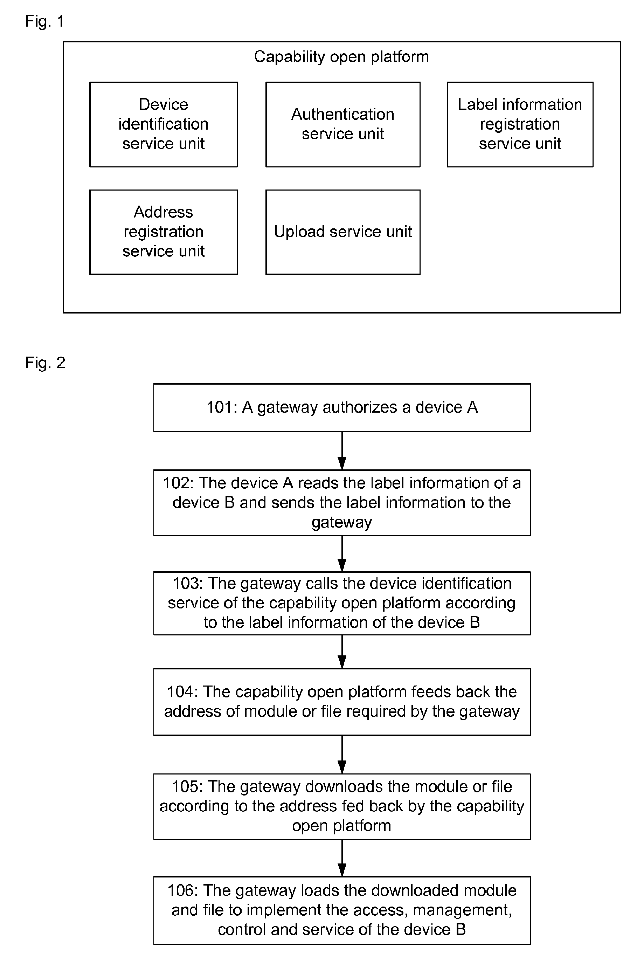

Fig. 1 is a schematic view of the structure of a capability open platform according to an embodiment of the disclosure. The capability open platform is configured to identify a terminal device which has not been connected to the gateway according to the label information uploaded by the gateway. Specifically, the capability open platform, as shown in Fig. 1, includes a Device identification service unit, an authentication service unit, a label information registration service unit, an address registration service unit and an uploading service unit. With these units, the capability open platform can provide a device identification service, a manufacturer authentication service, a label information registration service, a module and file download address registration service, and a module and file uploading service.

The device identification service unit is configured to identify the device type of a terminal device which has not been connected to the gateway according to the label information of the terminal device which has not been connected to the gateway uploaded by the gateway and to match a module and file required by the gateway for the device identification, management and service according to the device type and the information of the gateway which are uploaded by the gateway itself (e.g. the model of the gateway, the software version number of the gateway, and etc.), and to feed back the required module and file or the download addresses of the module and file to the gateway, preferably, feeding back the download addresses to the gateway so that the gateway may consequently download the module and file according to the download addresses. Here, the module and file required by the gateway for performing device identification, management and service includes an access protocol module, a management module, a device control module, a control interface, and a service module and file, which are required by the gateway. At the meantime, the device identification service unit also feeds a device basic information description file back to the gateway.

The authentication service unit is configured to authenticate manufacturers of terminal devices. Those who has passed through the authentication can register label information, register download addresses of the module and file required by the gateway and upload the module and file required by the getaway to a public download server; the registration, upload and download services can only be done after the success in the authentication.

The label information registration service unit is configured to register label information of a terminal device. The registered label information will serve as the unique basis for identifying the terminal device.

The address registration service unit is configured to register the download addresses of the module and file which are required by the gateway for the device identification, management and service. Since some modules and files for accessing or managing terminal devices are provided and maintained by manufactures, these manufacturers register the download addresses of the modules and files to the capability open platform via the address registration service provided by the address registration service unit, and then the capability open platform feeds back the registered download addresses to a gateway which needs the registered download addresses.

The uploading service unit is configured to provide upload services of the module and file which are required by the gateway for the device identification, management and service. The uploaded module and file are deployed uniformly into the public download server, and the download addresses of the module and file are fed back by the capability open platform to a gateway which needs the download addresses.

Fig. 2 is a schematic view of a flowchart for implementing an embodiment of the disclosure. As shown in Fig. 2, the method includes the following steps.

Step 101 includes that a gateway authorizes a device A.

Here, the authorized device A may be a terminal device provided with a camera, for example, a cell phone provided with a camera and having the function of reading bar a code, a QR code and a RFID label. After the success in authorization, the label information such as the bar code, QR code and RFID label sent from the device A to the gateway will serve as the basis on which the gateway downloads a module and file.

Here, the authorization of the device A by the gateway may be implemented by the following manners:
Manner 1: an authorization application is installed in the device A in advance; an authorization process may be initiated by a device authorization module of the gateway or the authorization application of the device A. Take the latter as an example, the device A sends an authorization request carrying basic information of the device A to the gateway; the device authorization module of the gateway determines whether to grant the authorization depending on the request of the device A; if the authorization is granted, the device authorization module of the gateway will send authorization acknowledgement carrying a session key; the authorization process is terminated after the device A receives the authorization acknowledgement from the gateway, and the device A sends label data adopting session key encryption consequently. The label information sent from the device A to the gateway within the availabel period of the authorization will serve as the basis on which the gateway downloads the module and file in need;
Manner 2: it is required that the device A can provide a label reading service, thus the gateway select the device A as the authorization device; the device authorization module of the gateway records the authorization relationship and authorization information and calls the label reading service of the device A; the device A then sends the read label information to the gateway after receiving a request from the gateway; the label information sent from the device A to the gateway within the availabel period of the authorization will serve as the basis on which the gateway downloads the module and file in need.

Step 102 includes that the device A reads label information including the bar code, QA code or RFID of a device B and sends the label information to the gateway.

Step 103 includes that the gateway calls the device identification service of the capability open platform according to the label information.

Here, the gateway learns that the device B is the one to be connected, managed, controlled and served, upon receiving the label information of the device B. The gateway calls the device identification service of the capability of a Wide Area Network (WAN) and sends the label information of the device B and the information of the gateway to the capability open platform.

Step 104 includes that the capability open platform feeds back the download address of the module or file required by the gateway.

Here, the capability open platform matches the module and file required by the gateway depending on the label information of the device B sent by the gateway. The contents fed back by the capability open platform includes the address of the protocol module or file for the implementation of the access of the device B by the gateway, the address of the module or file for the implementation of the management and control of the device B, the address of the module or file required for a control interface to control the device B, the download address of the module or file required for serving the device B, and the basic information description file of the device B.

Here, the advantages of the capability open platform preferably feeding back download addresses instead of feeding back the required module and file directly are in that: on one hand, network traffic is taken into consideration as a factor, and it is the gateway who decides whether to download and when to download; on the other hand, considering that some modules are provided and maintained by manufacturers of terminal devices in practical application scenarios, a manufacturer registers a download address to the capability open platform which then provides services to the external uniformly, the platform feeds back the download address to the gateway depending on the request from the gateway, the gateway again downloads the required module or file from a server of the manufacturer.

Step 105 includes that the gateway downloads the required module or file according to the address fed back by the capability open platform.

Here, the gateway downloads the required module or file according to the download address fed back by the capability open platform (as described in Step 104 concerning the contents fed back by the capability open platform and not to repeat here). The gateway may save the download address fed back by the capability open platform, the software module or file downloaded from WAN, and preferably uses the download address, software module or file which has been saved for implement the access, management, control or service of the device.

Step 106 includes that the gateway loads the downloaded module or file to implement the access, management, control and service of the device B.

Here, the manner by which the gateway implements the device access includes that:
Manner 1: after the gateway loads the device access protocol module or file, if the protocol includes a handshake (device enquiry) protocol, then the gateway may complete the handshake process according to the protocol to implement the device access by sending a handshake request actively (sending a handshake request at intervals) or monitoring the handshake request sent by the device;
Manner 2: for a protocol without any handshake (device enquiry) process, after the gateway receives a data packet sent by the device, the gateway performs an automatic adaptation to the downloaded access protocol according to the data packet protocol header or performs an automatic adaptation to the access protocol according to the underlying protocol information (e.g. MAC address) and the downloaded device basic information description file. If the read RFID label information includes the underlying protocol information (e.g. MAC address), then the automatic adaptation to the protocol can also be performed according to the underlying protocol information of the received data packet and the information read from the RFID;
Manner 3: if the automatic adaptation to the protocol cannot be performed or a plurality of access protocols are matched out after the adaptation when the two manners described above are adopted, the gateway displays a device on the interface as an unidentified device after receiving a data packet sent by the device, a user only needs to match the previously downloaded modules (the display information of a module displayed on the interface includes device basic information, such as a manufacturer, a product name, etc.) with the unidentified device, where the matching manner may be dragging the downloaded module to the unidentified device. After the device adaptation is finished, the gateway may manage and control the device through the downloaded module and the recorded communication address.

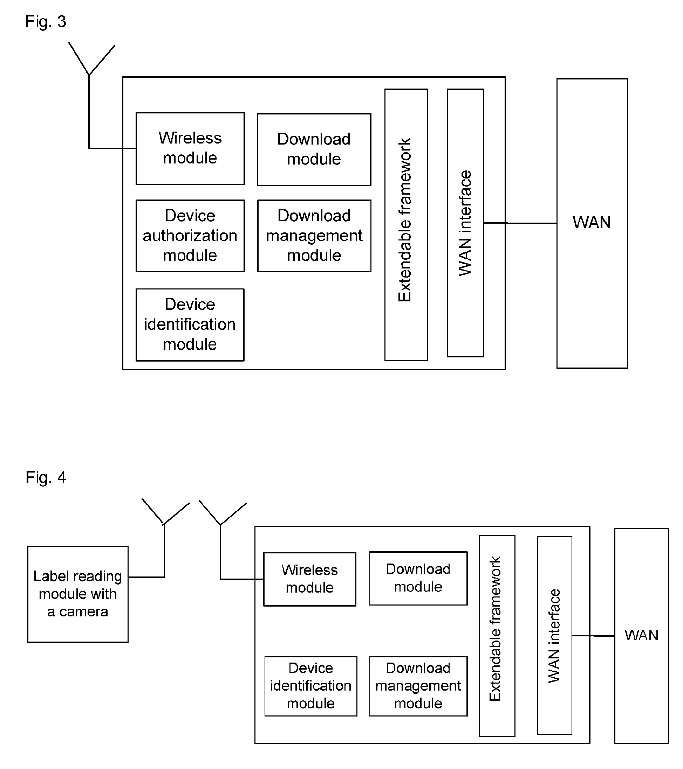

Fig. 3 is a schematic view of the structure of one embodiment of the gateway according to the disclosure, in which the gateway is configured to identify a terminal device which has not been connected to the gateway by authorizing a terminal device which has been connected to the gateway to read the label information of the terminal device which has not been connected to the gateway, wherein the terminal device which has been connected to the gateway is capable of reading label information. Specifically, the gateway includes the following modules:
   a device authorization module: the device authorization module of the gateway is configured to authorize an external device to serve as a label information collecting device of the gateway, and is further configured to grant or revoke the authorization of the external device and maintain the authorization information;
   a device identification module: the device identification module of the gateway is configured to request a device identification service of the capability open platform and to send the acquired terminal label information and the information of the gateway to the capability open platform;
   a wireless module: the gateway interacts with the authorized device through the wireless module, including realizing the authorization of device via the wireless module and the reception of the bar code, QR code or RFID label information of the device. The wireless module in general includes various wireless communication modes, such as Wifi, Bluetooth, Zigbee, RF433, RF779 or infrared light;
   an extendable framework: the gateway dynamically loads the downloaded module though the extendable framework to achieve a function extension. The extendable framework may choose an OSGI framework and the like. The OSGI is the acronym of Open Service Gateway Initiative, which is an object-oriented dynamic model. The OSGI framework defines a standard, object-oriented computing environment, in which a software component (bundle) can be installed, updated or removed during running without interruption of device. The required bundle may be downloaded from a download server with this OSGI, so as to implement the access, management, control and service of the terminal device;
   a download module: the download module of the gateway downloads, from WAN, the software module or file which is required for implementing the access, management, control and service of the device according to the download address fed back by the capability open platform;
   a download management module: the download management module manages the software module or file downloaded from WAN, and may save or delete them according to the strategy. For example, it is determined whether to delete the corresponding module or file depending on the device connection state or the usage of the downloaded software module; and
   a WAN interface: the WAN interface is configured to connect with a WAN, more generally to the Internet.

The benefit of this gateway is that the gateway authorizes devices capable of reading labels for implementing the acquisition of bar code, QR code or RFID label information of other devices, which modifies the gateway slightly and takes full advantage of existing devices (e.g. cell phones) in the network to acquire label information of other devices, better reducing the cost in the gateway and facilitating wide implementation of the gateway. Further, the method proposed with the gateway according to embodiments of the disclosure does not need any modification to existing terminal devices, but only needs the bar codes, QR codes or RFID labels which are probably present in all devices, then the gateway authorize devices such as cell phones via the existing wireless module for implementing the acquisition of label information of the devices. The use of the embodiments of the disclosure leads to a slight modification to existing devices, which makes the embodiments relatively highly practicable; in consideration of usability, a user can implement the access, management, control of a device and serve the device only if the user reads the bar code, QR code or RFID label information of the device with an authorized cell phone, which simplifies the usage by the user.

Fig. 4 is a schematic view of the structure of another embodiment of the gateway according to the disclosure, in which the gateway is configured to read the label information of the terminal device which has not been connected to the gateway, so as to implement the identification of a terminal device which has not been connected to the gateway, wherein the gateway is capable of reading label information. Specifically, the gateway includes the following modules:
a label reading module provided with a camera: the gateway includes a label reading module provided with a camera, and the module reads the bar code and QR code information of a device and sends the information to the wireless module of the gateway via an antenna;
a device identification module: the device identification module requests a device identification service of the capability open platform and sends the acquired terminal label information and the information of the gateway to the capability open platform;
a wireless module: the gateway interacts with the label reading module provided with a camera via the wireless module to acquire the bar code, QR code or RFID label information of the device. The wireless module in general includes various wireless communication modes, such as Wifi, Bluetooth, Zigbee, RF433, RF779 or infrared light;
an extendable framework: the gateway dynamically loads the downloaded module though the extendable framework to achieve a function extension. The extendable framework may choose an OSGI framework;
a download module: the download module of the gateway downloads the software module or file which is required for implementing the access, management, control and service of the device according to the download address fed back by the capability open platform;
a download management module: the download management module manages the software modules or files downloaded from a WAN, and may save or delete them according to a strategy. For example, it is determined whether to delete the corresponding module or file depending on the device connection state or the usage of the downloaded software module; and
a WAN interface: the WAN interface is configured to connect with a WAN, more generally to the Internet.

This gateway differs with the one illustrated in Fig. 3 in that it does not include the device authorization module, and the difference from the previous method is that it does not require the device authorization process, this method is implemented through the label reading module provided with a camera because the gateway here has the label reading capability.

To summarise, either of the implementation modes described above may achieve PNP of a terminal device and thus avoid the existence of too many device protocols and standards. This enables the gateway to identify the device types of terminal devices which are not under the protocols supported by the gateway while needed to be accessed to the gateway, so as to be compatible with the PNP management and service of all terminal devices.

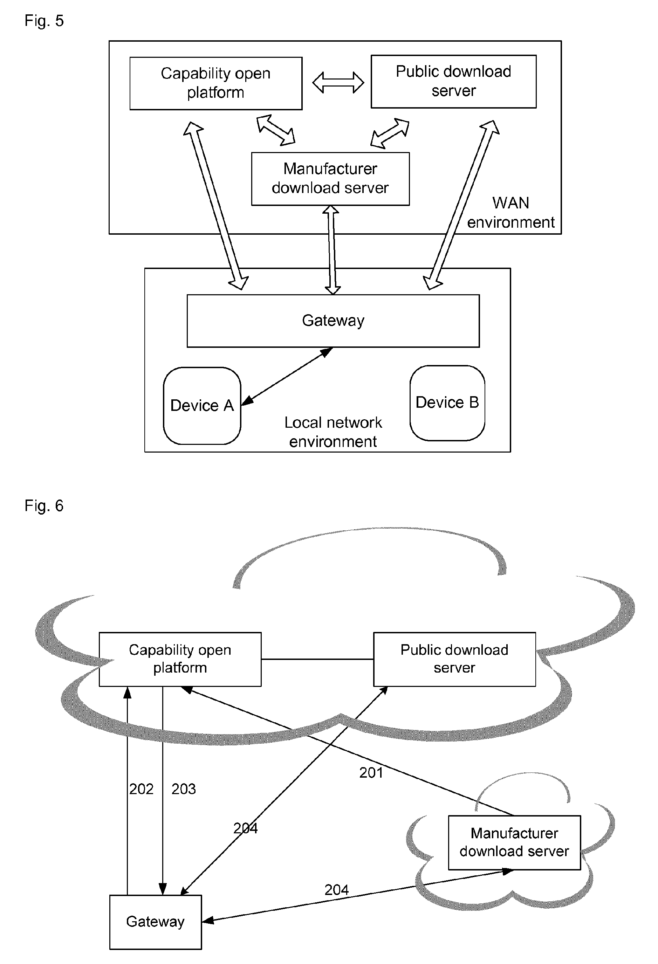

Fig. 5 is a schematic view of a network architecture during the interaction between the capability open platform and the gateway according to an embodiment of the disclosure, the network architecture includes the following modules:
a gateway: the gateway implements the access of devices under various protocols, and provides management and control of accessed devices and provides required services to them. In this system, the gateway implements the access of various devices downwards, and implements, as an interface, the interaction with the capability open platform upwards;
device A: device A has been connected to the gateway and is capable of reading bar codes, QR codes and RFID labels;
device B: device B has not been connected to the gateway; since the gateway cannot support the protocol of the device B, the device B can not be managed, controlled or served by the gateway;
a capability open platform: the capability open platform provides a device identification service, a manufacturer authentication service, a label information registration service, a module and file download address registration service, and a module and file upload service;
a public download server: the public download server provides a download service of the module or file required by the gateway, receives the module or file uploaded by a manufacturer download server; and
a manufacturer download server: the manufacturer download server is provided and maintained by a terminal manufacturer, registers a download address of the module or file to the capability open platform or directly uploads the module or file to the public download server, wherein the gateway may download the required module or file from the manufacturer download server.

Fig. 6 is a schematic view of the interaction with external based on the capability open platform according to an embodiment of the disclosure, where the capability open platform interacts with the public download server and the manufacturer download server to provide a device identification service to the gateway, therefore implementing PNP of a device. The interaction process includes:
Step 201, the capability open platform interacts with the manufacturer download server; and the manufacturer download server registers the label information of the device and the download address of module or file via an interface provided by the capability open platform, or uploads the module or file directly to the public download server;
Step 202, the gateway calls the device identification service of the capability open platform, sends the label information of the device and information of the gateway to the platform;
Step 203, the capability open platform feeds back the download address of the required module or file and the device basic information description file to the gateway; and
Step 204, the gateway downloads the required module or file from the public download server or from the manufacturer download server according to the download address fed back by the platform.

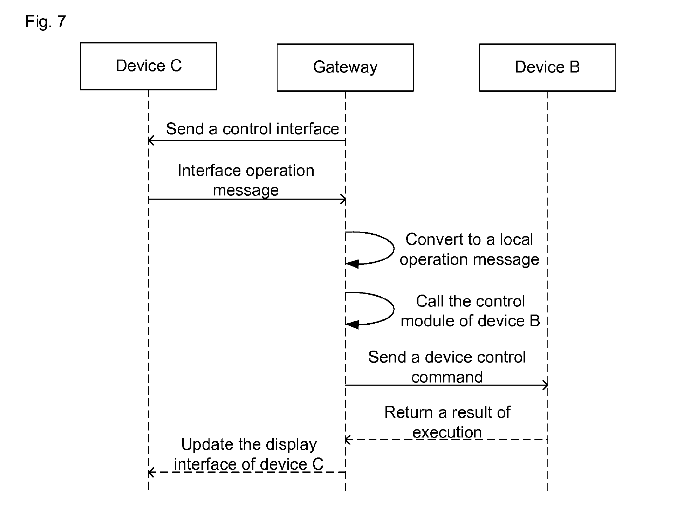

The gateway according to embodiments of the disclosure may also send the control interface of the device B to a device C to enable the device C to control the device B through this control interface. Fig. 7 is a flowchart of one implementation mode in which the device C controls the device B through the gateway according to the embodiments of the disclosure, including: 1. the control interface of the device B is sent to the device C (device C may be a cell phone or a tablet PC and may be identical to the device A); 2. an operation message of a user on the control interface of the device C is firstly sent to the gateway; 3. the gateway converts the received operation message into a local operation message; 4. the gateway calls the downloaded control module for the device B and generates a device control command which satisfies the control protocol of the device B; 5. the gateway sends the device control command to the device B via a wireless interface (e.g. Wifi, Bluetooth, Zigbee, RF433, RF779, infrared light, etc.); and 6. the device B returns a result of execution.

Below is an application example of a home application of IOT according to an embodiment of the disclosure.

In the home application of IOT, a gateway has been deployed in the house and connected to a WAN, that is, cell phones of the family members has been connected to the WAN. In this case, a new purchased refrigerator uses a private protocol of the manufacturer while the gateway supports the MDMP protocol of China Telecom. It is required that the gateway can implement the access, management and control of the refrigerator and support refrigerator to convert to the MDMP protocol, so as to implement communications between the refrigerator and other appliances in the house. The following steps are provided:
step 301, the gateway authorizes a cell phone;
the cell phone is connected to the gateway via Wifi; the cell phone will send an authorization request packet accompanied by its model information to the gateway so long as the authorization option is selected in a required software which has been installed in the cell phone; after receiving the authorization request packet, the gateway displays it in the interface, at the same time, displays the device information (model of the cell phone) that initiated the authorization request and asks for grant of the authorization; the user chooses to grant the authorization via the human-machine interface of the gateway; the gateway records the authorization information and feeds back a authorization success message and a session key to the cell phone; the entire authorization process is terminated after the cell phone receives the authorization acknowledgement. The label information of device sent by the cell phone which has been authorized serves as the basis on which the gateway downloads modules, whereas the label information sent from a device to the gateway which has not been authorized or whose authorization has been revoked merely serves as normal data to process;
step 302, the cell phone reads the QR code of the refrigerator to be connected and sends the QR code information to the gateway;
the option of scanning QR code in an application software of the cell phone is selected and the camera thereon gets close to the QR code of the refrigerator; the cell phone reads the QR code on the refrigerator with the camera and sends the information which has been encrypted by the above session key to the gateway;
step 303, the gateway acquires the download address of the required module from the capability open platform according to the QR code of the refrigerator; after the gateway receives the QR code of the refrigerator, it calls the capability open platform to initiate a device identification service and sends the QR code of the refrigerator and the device model of the gateway to the capability open platform;
step 304, the capability open platform matches the required software module and feeds the download address of the required software module back to the network according to the QR code of the refrigerator and the model of the gateway;
the feedback information specifically includes: the download address of the device access module of the protocol adopted by the refrigerator, the download address of the device management module based on the protocol adopted by the refrigerator, the download address of the conversion module converting the protocol of the refrigerator to the M2M device management protocol (MDMP), the download address of the refrigerator control interface provided by the manufacturer of the refrigerator, and the basic information description XML file of the refrigerator;
step 305, the gateway downloads the required modules from download servers. The gateway downloads the required module from the public download server and the download server maintained by the manufacturer respectively according to the download addresses fed back by the capability open platform. The gateway downloads the device access module and the conversion module to the MDMP protocol from the public download server, and downloads the refrigerator management/control module and the control interface from the download server provided by the manufacturer;
step 306, the gateway loads the downloaded modules to implement the access, management, control and service of the refrigerator. The modules downloaded by the gateway are in form of bundle package. The gateway loads the downloaded bundles to implement a function extension of the gateway through the OSGI framework of the gateway. After the bundles have been loaded, the gateway sends a device enquiry packet via the device access bundle, while the refrigerator feeds back corresponding information after receiving the enquiry packet, thus the communication handshake is completed. The user may control the refrigerator through the refrigerator control interface bundle loaded on the gateway, for example such as, setting the temperature and time, etc; and

Step 307, the appliance control function and the refrigerator device required to be controlled are selected in the application software of the cell phone. The gateway sends the control interface bundle of the selected refrigerator to the cell phone. In this case, the refrigerator control interface displayed on the cell phone is identical to that on the display of the gateway. The user may set the temperature and time of the refrigerator via the refrigerator control interface of the cell phone. The operation message on the refrigerator control interface of the cell phone is sent by the user to the gateway firstly and then converted to a refrigerator control command by the refrigerator control module of the gateway, the control command being sent to the refrigerator via the gateway eventually.

What are described above are merely the preferred embodiments of the disclosure, but not to limit the scope of the disclosure.

### INDUSTRIAL APPLICATION

The capability open platform according to the embodiments of the disclosure is configured to identify a terminal device which has not been connected to the gateway according to the label information uploaded by the gateway, thus implementing the PNP of the terminal device which is not supported. The embodiments of the disclosure implement the identification of a terminal device which has not been connected to the gateway, which enables the gateway to identify the terminal device which is not under the protocols supported by the gateway but needed to be connected, so as to be compatible with PNP management and service of all terminal devices.

## Claims

1. A capability open platform for implementing Plug-and-Play (PNP) management of a terminal device, configured to identify a terminal device which has not been connected to a gateway according to label information uploaded by the gateway, to enable the gateway to implement PNP of the terminal device which is not supported.

2. The capability open platform according to claim 1, wherein the capability open platform comprises a device identification service unit configured to identify a device type of the terminal device which has not been connected to the gateway according to the label information of the terminal device uploaded by the gateway, to match according to information of the gateway a module and file required by the gateway for device identification, management and service, and to feed back to the gateway the required module and file or download addresses of the required module and file.

3. The capability open platform according to claim 2, wherein the capability open platform further comprises an authentication service unit, a label information registration service unit, an address registration service unit and an upload service unit; wherein
the authentication service unit is configured to authenticate a manufacturer of the terminal device, followed by registration, upload and download services when the authentication succeeds;
the label information registration service unit is configured to register label information of the terminal device;
the address registration service unit is configured to register the download addresses of the module and file which are required by the gateway for the device identification, management and service; and
the uploading service unit is configured to provide upload services of the module and file which are required by the gateway for the device identification, management and service.

4. A device identification method for implementing Plug-and-Play (PNP) management of a terminal device, comprising: acquiring, by a gateway, label information of a terminal device through a terminal authorization mechanism, and calling a device identification service of a capability open platform to identify the terminal device that has not been connected to the gateway.

5. The device identification method according to claim 4, wherein the acquiring, by a gateway, label information of a terminal device through a terminal authorization mechanism comprises: authorizing, by the gateway, a terminal device which has been connected to the gateway and has capability of reading label information to read the label information of the terminal device which has not been connected to the gateway, to acquire the label information of the terminal device which has not been connected to the gateway.

6. The device identification method according to claim 4, wherein the identifying the terminal device that has not been connected to the gateway comprises:
sending, by an authorized terminal device, to the gateway, read label information of the terminal device which has not been connected to the gateway; and
calling, by the gateway, the device identification service of the capability open platform after receiving the label information sent by the authorized terminal device, wherein data uploaded from the gateway to the capability open platform at least comprises the label information of the terminal device which has not been connected to the gateway and information of the gateway.

7. The device identification method according to claim 4, 5 or 6, wherein the label information comprises any one of following information: a bar code, a Quick Response (QR) code, and a Radio Frequency Identification Device (RFID) label.

8. The device identification method according to claim 4, after the gateway calls the device identification service of the capability open platform, the method further comprising:
acquiring, by the capability open platform, the label information of the terminal device which has not been connected to the gateway and information of the gateway, which are uploaded by the gateway;
identifying, by the capability open platform, a device type of the terminal device which has not been connected to the gateway according to the label information of the terminal device which has not been connected to the gateway, matching, according to the device type and the information of the gateway, a module and file required by the gateway for device identification, management and service, and feeding back the required module and file or download addresses of the required module and file to the gateway.

9. The device identification method according to claim 8, further comprising:
performing, by the gateway, the device identification, management and service directly according to the required module and file; or
downloading, by the gateway, the required module and file according to the download addresses and then performing the device identification, management and service.

10. A gateway for implementing Plug-and-Play (PNP) management of a terminal device, comprising a device authorization module, a device identification module and a extendable framework; wherein
the device authorization module is configured to authorize an external device to serve as a label information collecting device of the gateway, and further configured to grant or revoke the authorization of the external device and to maintain authorization information;
the device identification module is configured to call a device identification service of a capability open platform and to send label information of a terminal device and information of the gateway to the capability open platform; and
the extendable framework is configured to enable the gateway to dynamically load a downloaded module to achieve a function extension.

11. The gateway according to claim 10, wherein the label information comprises any one of following information: a bar code, a Quick Response (QR) code, and a Radio Frequency Identification Device (RFID) label.

12. The gateway according to claim 10, further comprising a wireless module, a download module and a download management module; wherein
the wireless module is configured to realize the authorization of the external device and to receive a bar code or a QR code or a RFID label by interacting with the authorized external device through at least one of following communication methods: Wifi, Bluetooth, Zigbee, RF433, RF779 and infrared light;
the download module is configured to download from a Wide Area Network (WAN) a module or file which is required for implementing management and service of the terminal device according to a download address fed back by the capability open platform; and
the download management module is configured to manage the module or file downloaded from the WAN, and is further configured to save or delete the downloaded module or file according to a strategy.

13. A gateway for implementing Plug-and-Play (PNP) management of a terminal device, comprising a label reading module provided with a camera, a device identification module and a extendable framework; wherein
the label reading module provided with a camera, which is connected with a host of the gateway wirelessly and has a great mobility, is configured to read label information and send the label information wirelessly;
the device identification module is configured to call a device identification service of a capability open platform and to send acquired label information of a terminal device and information of the gateway to the capability open platform; and
the extendable framework is configured to enable the gateway to dynamically load a downloaded module to achieve a function extension.

14. The gateway according to claim 13, wherein the label information comprises any one of following information: a bar code, a Quick Response (QR) code, and a Radio Frequency Identification Device (RFID) label.

15. The gateway according to claim 13, further comprising a wireless module, a download module and a download management module; wherein
the wireless module is configured to realize the authorization of the external device and to receive a bar code or a QR code or a RFID label by interacting with the authorized external device through at least one of following communication methods: Wifi, Bluetooth, Zigbee, RF433, RF779 and infrared light;
the download module is configured to from a Wide Area Network (WAN) a module or file which is required for implementing management and service of the terminal device according to a download address fed back by the capability open platform; and
the download management module is configured to manage the module or file downloaded from the WAN, and is further configured to save or delete the downloaded module or file according to a strategy.
